**Europäisches Patentamt**

(19) **European Patent Office**

**Office européen des brevets**

(11) Numéro de publication: **0 045 701**
**B1**

(12) ## FASCICULE DE BREVET EUROPEEN

(45) Date de publication du fascicule du brevet:
**10.04.85**

(51) Int. Cl.⁴: **G 02 B 23/08,** G 02 B 23/16,
B 63 G 8/38

(21) Numéro de dépôt: **81401268.8**

(22) Date de dépôt: **06.08.81**

(54) **Périscope de sous-marin.**

(30) Priorité: **06.08.80 FR 8017386**

(43) Date de publication de la demande:
**10.02.82 Bulletin 82/6**

(45) Mention de la délivrance du brevet:
**10.04.85 Bulletin 85/15**

(84) Etats contractants désignés:
**DE FR GB IT NL SE**

(56) Documents cités:
**DE - A - 2 238 058**
**DE - C - 240 294**
**DE - C - 251 543**
**US - A - 2 503 748**
**US - A - 2 667 813**

(73) Titulaire: **SOCIETE D'OPTIQUE, PRECISION
ELECTRONIQUE ET MECANIQUE - SOPELEM, 102 rue
Chaptal, F-92300 Levallois-Perret (FR)**

(72) Inventeur: **Ragain, Jacques, 31 avenue Raspail,
F-95330 Domont (FR)**
Inventeur: **Prevost, Marc, 6/425 allée Maxime Gorki,
F-94120 Fontenay-sous-Bois (FR)**

(74) Mandataire: **Saint-Martin, René et al,
CREUSOT-LOIRE 15 rue Pasquier, F-75383 Paris
Cedex 08 (FR)**

**Description**

La présente invention se rapporte à un périscope de sous-marin pouvant être utilisé comme périscope de veille ou d'attaque.

Un périscope de sous-marin comprend une tête d'observation montée à la partie supérieure d'un tube de grande longueur contenant une optique, associé, en partie basse, à un poste d'observation comportant notamment un oculaire. Le périscope de veille qui procure un fort champ et une grande amplitude de pointage est équipé d'une tête relativement volumineuse. Le périscope d'attaque qui procure un faible champ et une amplitude de pointage plus faible que celle du périscope de veille est équipé d'une tête de faible encombrement. Le tube du périscope est guidé par des paliers à roulements et rotules permettant le coulissement vertical et la rotation autour d'un axe vertical. Ces paliers, au nombre de trois, limitent les flexions du tube et augmentent la rigidité du mat, le palier inférieur assurant par ailleurs l'étanchéité.

Dans un périscope de veille, le bloc oculaire est solidaire du tube mobile. Celui-ci est relativement long et le palier inférieur de guidage est situé relativement bas, à proximité du dessus de la coque épaisse du sous-marin. La grande longueur du tube du périscope de veille fait que, lorsque le périscope est en position abaissée, le pied du tube est relativement bas. Pratiquement la partie inférieure du tube se loge alors dans un puits monté au-dessous de la plateforme logée dans la coque du sous-marin. Ce puits encombre le compartiment batteries qui est situé au-dessous de cette plateforme.

Dans un périscope d'attaque, le bloc oculaire est fixe. A la sortie du tube, le faisceau de lumière parallèle est dévié vers le bloc oculaire. Les paliers de guidage sont nettement plus rapprochés que dans un périscope de veille et le palier inférieur est ainsi situé nettement au-dessus de la coque épaisse. Corrélativement, la longueur du tube est plus faible que la longueur du tube d'un périscope de veille. Lorsque le tube est abaissé, le pied du tube ne descend pas trop profond dans la coque et est sensiblement situé au niveau de la plateforme.

On connaît par les brevets US-A-2 503 748 et DE-C-251 543 des périscopes dont les tubes sont élevés ou abaissés par un vérin. Dans le document US-A-2 503 748 le vérin est monté au-dessous du tube et coaxialement à celui-ci. Le tube peut tourner du fait que le piston peut tourner dans le cylindre. L'encombrement procuré par le vérin fait que cet agencement n'est adapté qu'à un périscope dont le bloc oculaire est disposé au-dessus du vérin en étant solidaire du tube. Dans le document DE-C-251 543, le vérin est disposé autour du tube, au-dessus du pied de celui-ci et du bloc oculaire. Le vérin doit prendre appui sur la coque épaisse. Cet agencement est adapté à un périscope dont le bloc oculaire est solidaire du tube.

La présente invention a pour objet un périscope de sous-marin à bloc oculaire fixe dont le mécanisme de hissage et d'affalage est entièrement situé dans la coque épaisse du sous-marin. Ce périscope est adapté à la fois à une version de périscope de veille et à une version de périscope d'attaque, par simple changement de la tête d'observation. Le mécanisme de manœuvre du périscope permet de descendre celui-ci rapidement. Il permet la modulation et l'augmentation des vitesses de manœuvre dans la partie opérationnelle du hissage. Ce mécanisme est simple et les risques d'avaries sont minimisés. La sécurité est augmentée. L'agencement du périscope selon l'invention réduit les volumes occupés à l'intérieur du sous-marin, en particulier au-dessous du plancher et permet la suppression de la plateforme des périscopes ce qui augmente l'habitabilité. Cet agencement augmente la stabilité ce qui permet l'utilisation du périscope à des vitesses opérationnelles supérieures.

Le périscope selon l'invention comporte un tube équipé d'une tête d'observation et d'une optique et guidé verticalement par des paliers dans un sas solidaire de la coque épaisse et susceptible d'être hissé ou abaissé verticalement par l'intermédiaire d'une pièce de suspension immobilisée en rotation et montée par l'intermédiaire d'un palier à la partie inférieure du tube de manière que celui-ci puisse pivoter et comporte d'autre part un bloc d'observation comportant l'oculaire et recevant le faisceau à la sortie du tube. Il est essentiellement caractérisé par le fait qu'il comporte un vérin monté entre la pièce de suspension et un appui situé à l'intérieur de la coque épaisse à un niveau inférieur à cette pièce de suspension qui s'appuie sur la tige dudit vérin, le bloc d'observation étant fixe par rapport au sous-marin et le tube étant entrainé en rotation par un moteur.

Selon une caractéristique de l'invention, le vérin comporte un cylindre fixe dans lequel coulisse un piston-cylindre dans lequel coulisse un piston solidaire de la tige sur laquelle repose la pièce de suspension, la chambre située au-dessous du piston communiquant avec la chambre côté fond du cylindre.

Selon une caractéristique de l'invention, le périscope comporte un réflecteur central centré sur l'axe du tube et logé dans le sas pour réfléchir le faisceau sortant du tube et un réflecteur latéral monté à l'écart de l'axe du tube pour réfléchir le faisceau venant du réflecteur central suivant un axe dirigé vers le bas et vers l'oculaire.

Selon une caractéristique le réflecteur central et le réflecteur latéral sont fixes par rapport au bloc oculaire, le réflecteur latéral étant monté à l'extérieur du sas.

Selon une autre caractéristique, la pièce de suspension supporte le réflecteur central et le réflecteur latéral qui réflèchissent le faisceau vers le fond du sas selon un axe optique vertical décalé de l'axe du tube.

L'invention va maintenant être décrite avec plus de détails en se référant à un mode de réalisation donné à titre d'exemple et représenté par le dessin annexé.

Les figures 1 et 2 représentent chacune, en coupe verticale, un mode de réalisation du périscope selon l'invention.

La figure 3 représente une coupe du vérin de manœuvre du périscope.

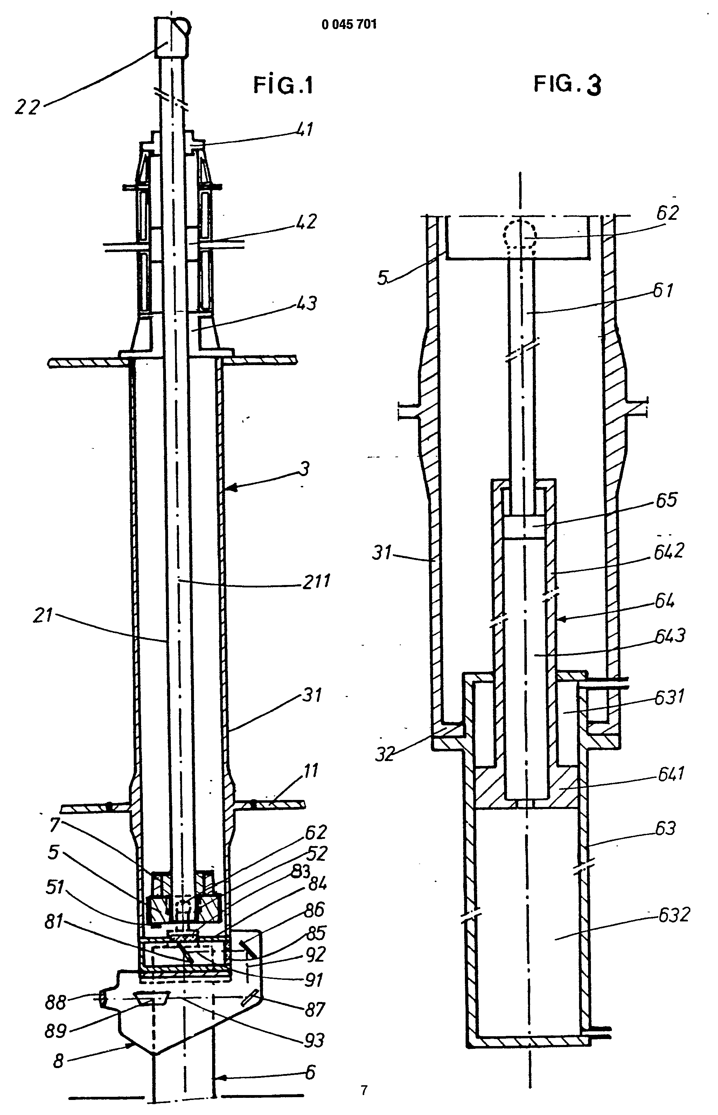

Le périscope représenté par les figures 1 à 3 est intégré dans un sous-marin dont la coque épaisse est repérée 11. Il comprend un tube 21 équipé à sa partie supérieure d'une tête d'observation 22 munie d'un prisme de visée en site. Ce tube comporte en aval du prisme de la tête d'observation une optique appropriée reprenant le faisceau réfléchi par ce prisme de manière à donner, au pied du tube, un faisceau parallèle. Ce tube est guidé par des paliers 41, 42, 43 qui sont logés dans une épontille. Ces paliers à roulements et rotules guident le tube à la fois en rotation autour de son axe vertical de symétrie 211 et en translation selon cet axe. Le tube est logé à l'intérieur d'un sas 3 constitué d'un cylindre 31 fermé par un fond inférieur 32. Ce sas 3 passe par une ouverture de la coque épaisse 11 à laquelle il est soudé. L'épaisseur de la paroi du sas est déterminée de manière que ce sas résiste à la pression de l'eau. Le tube passe à sa partie inférieure dans une pièce de suspension annulaire 5 qui l'entoure extérieurement et qui sert à la supporter. Un palier 52 à roulements et butée est monté entre la pièce de suspension et le tube de manière que cette pièce de suspension et le tube soient liés verticalement en translation et puissent pivoter relativement autour de 211, la pièce 5 étant immobilisée en rotation. Cette pièce 5 est guidée en translation selon l'axe 211 du tube par des moyens de guidage l'empêchant de tourner autour de cet axe. Ces moyens sont constitués par des patins ou des galets qui roulent ou glissent contre des pistes ou des rails parallèles à 21 et ménagés contre la paroi intérieure du cylindre 31.

Le tube 21 peut être entraîné en rotation autour de l'axe 211 par un moteur 7 qui est monté directement sur la pièce de suspension 5 de manière que son stator soit fixé sur cette pièce 5, le rotor-coaxial à l'axe 211 étant solidaire du tube 2. Des amortisseurs 51 sont montés au-dessous de la pièce de suspension 5 de manière à amortir les chocs éventuels du tube sur le fond 32.

Le tube 21 est hissé ou abaissé selon l'axe 211 par un vérin télescopique 6 qui est monté entre la pièce de suspension 5 et un appui fixe situé à l'intérieur de la coque épaisse à un niveau inférieur à cette pièce de suspension. Celle-ci s'appuie sur la tige 61 du vérin dont l'axe est vertical. L'appui de la pièce 5 sur la tige s'effectue par l'intermédiaire d'une rotule 62 afin de compenser les désalignements. Le cylindre 63 s'appuie contre l'appui fixe à l'intérieur de la coque épaisse du sous-marin.

Ce vérin télescopique 6 comporte, dans le cylindre fixe 63, un piston-cylindre 64 composé, en partie basse, d'un piston 641 de grand diamètre qui coulisse avec étanchéité dans l'alésage du cylindre 63 et, en partie haute, d'un corps de cylindre 642 de diamètre plus faible qui est guidé dans le fond supérieur du cylindre 63. Ce piston-cylindre 64 comporte un alésage cylindrique coaxial à l'alésage du cylindre 63. Cet alésage forme une chambre dans laquelle coulisse avec étanchéité un piston 65 auquel est fixée, vers le haut, la tige 61. Celle-ci coulisse dans le fond du piston 642. Le vérin formé par le cylindre 63 et par le piston-cylindre creux 64 constitue un vérin à double effet, la chambre inférieure – côté fond – 632 et la chambre annulaire 631 située au-dessus du piston 641 étant alimentées en huile. La chambre 643 située au-dessous du piston 65 communique avec la chambre inférieure 632, le vérin constitué par le piston-cylindre et par le piston 65 constituant un vérin à simple effet. Le cylindre fixe 63 passe dans une ouverture du fond 32 du sas auquel il est fixé. La paroi du cylindre 63 débouchant dans le sas est adaptée pour résister à la pression. Lorsque la chambre inférieure 632 est mise en pression, le piston de grand diamètre 64 monte dans le cylindre 63 et le piston de petit diamètre 65 monte dans le piston-cylindre 64 – à une vitesse plus grande que celle du piston 641 – en déplaçant la tige 61 qui travaille en poussée. Les dispositifs de fin de course sont directement montés sur le vérin inférieur à double effet.

Le bloc d'observation repéré 8 dans son ensemble est fixe par rapport au sous-marin et il est situé à l'extérieur du sas 3 au-dessous de celui-ci. Le faisceau, après le tube 21, est réfléchi par une série de réflecteurs 81, 86, 87 vers les éléments optiques d'observation fixes et extérieurs au sas tels que l'oculaire 88. Un réflecteur central 81 est monté au-dessous du tube 21 et au-dessus du fond 32 de manière à être centré sur l'axe vertical 211. Le faisceau parallèle, à la sortie du tube 21, est réfléchi par ce réflecteur – dont la surface réfléchissante est inclinée sur l'axe vertical 211 – suivant l'axe optique 91 situé au-dessus du fond 32, cet axe étant de préférence horizontal. Le réflecteur latéral 86 est monté à l'écart de l'axe 211, sur l'axe 91. Il réfléchit le faisceau provenant du réflecteur 81 vers le bas, suivant l'axe 92. Un réflecteur latéral et fixe 87 est monté au-dessous du réflecteur 86. L'axe 93 réfléchi sur le réflecteur 87 passe au-dessous du fond 32 du sas. L'oculaire 88 est centré sur cet axe 93 et reçoit le faisceau. Cet oculaire est situé au-dessous du sas et au-dessous de la fin de course inférieure du pied du tube 21. Un prisme de Wollaston 89 est monté sur le trajet du faisceau en avant de l'oculaire 88. Les réflecteurs 86 et 87 sont situés au-delà de l'axe 211 par rapport à l'oculaire. Le bloc d'observation comporte un oculaire ou un binoculaire et d'autres appareillages d'observation ou de prise de vues tels que: appareil photo, caméra, écran etc...

Dans le monde de réalisation de la figure 1, l'axe du vérin 6 est décalé de l'axe du tube 21. Le réflecteur central 81 est fixé et logé dans une enceinte 84 étanche, résistante à la pression et solidaire du sas 3. Le faisceau sortant du tube 21 entre dans l'enceinte 84 au travers d'un hublot central 83 avant d'être réfléchi sur le réflecteur 81. Ce hublot est monté avec étanchéité sur l'enceinte 84 entre le tube et le réflecteur 81. Cette enceinte 84 est constituée par un tube 84 s'étendant parallèlement à l'axe 91 de manière à traverser le sas 3 de part en part. Le réflecteur latéral 86 centré sur l'axe 91 est monté fixe à l'extérieur du sas 3. Un hublot 85 est monté avec étanchéité sur le sas entre le réflecteur 81 et le réflecteur 86 de manière à être traversé par le faisceau allant de l'un à l'autre desdits réflecteurs.

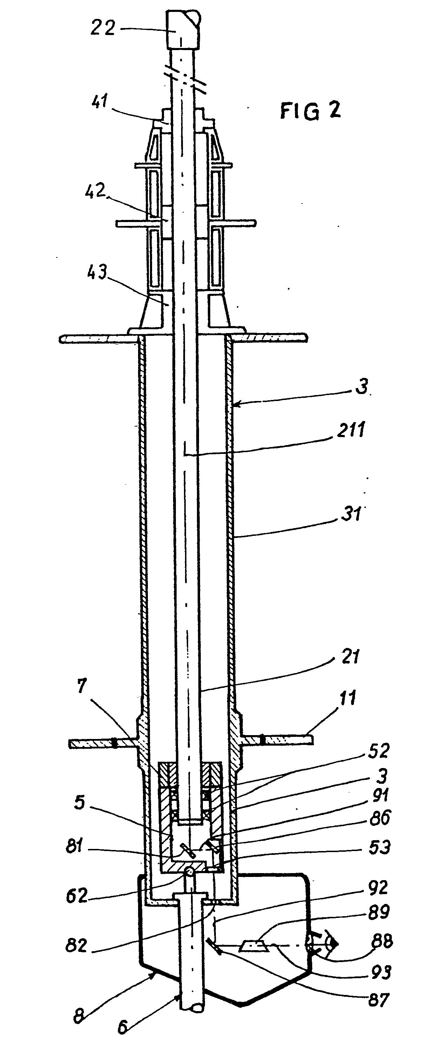

Dans le mode de réalisation de la figure 2, le vérin 6 est coaxial au tube. Le réflecteur central 81 et le réflecteur latéral 86 tous deux ayant des faces réfléchissantes parallèles et opposées sont montés – de manière fixe – dans un logement de la pièce de suspension 5. Celle-ci a la forme d'une cuvette dont le fond enveloppe le bas du tube 21. Le réflecteur central 81 est logé au-dessus de la rotule d'appui 62 du vérin sur la pièce de suspension. Les réflecteurs 81, 86 logés dans la pièce de suspension 5 réflèchissent le faisceau vers le bas, au-dessous de la pièce de suspension 5, selon un axe optique 92 vertical, décalé parallèlement par rapport à l'axe 211 du tube. De cette manière le faisceau sort du sas selon un axe optique parallèle à l'axe de translation du tube. Un hublot 53 est monté avec étanchéité sur la pièce 5 au-dessous du réflecteur 86 c'est à dire centré sur l'axe 92. Il assure l'étanchéité du logement des réflecteurs dans la pièce de suspension. Un hublot de fond 82 est monté avec étanchéité sur le fond du sas de manière à être centré sur l'axe 92. Il assure l'étanchéité entre l'intérieur du sas et le bloc oculaire 8. Le réflecteur 87 situé au-dessous du hublot de fond réflèchit le faisceau, du côté opposé au vérin, vers l'oculaire 8.

La tête 22 montée au sommet du tube 21 est interchangeable. Elle est réunie au tube 21 par un assemblage rigide démontable, protégé de la corrosion. La tête d'observation utilisée est soit une tête de périscope d'attaque soit une tête de périscope de veille. Le changement de grossissement peut être réalisé à l'aide d'un objectif à plusieurs champs.

Il est bien entendu que l'on peut, sans sortir du cadre de l'invention, imaginer des variantes et perfectionnements de détails et de même envisager l'emploi de moyens équivalents.

**Revendications**

1. Périscope de sous-marin comportant un tube (21) équipé d'une tête d'observation (22) et d'une optique et guidé verticalement par des paliers (41, 42, 43) dans un sas (3) solidaire de la coque épaisse (11) et susceptible d'être hissé ou abaissé verticalement par l'intermédiaire d'une pièce de suspension (5) immobilisée en rotation et montée par l'intermédiaire d'un palier (52) à la partie inférieure du tube (21) de manière que celui-ci puisse pivoter, d'autre part un bloc d'observation (8) comportant l'oculaire (88) et recevant le faisceau à la sortie dudit tube (21), caractérisé par le fait qu'il comporte un vérin (6) monté entre ladite pièce de suspension (5) et un appui situé à l'intérieur de la coque épaisse (11) à un niveau inférieur à cette pièce de suspension (5) qui s'appuie sur la tige (61) dudit vérin, le bloc d'observation (8) étant fixe par rapport au sous-marin et le tube (21) étant entraîné en rotation par un moteur (7).

2. Périscope selon la revendication 1, caractérisé par le fait que le vérin (6) comporte un cylindre fixe (63) dans lequel coulisse un piston-cylindre (64) dans lequel coulisse un piston (65) solidaire de la tige (61) sur laquelle repose la pièce de suspension (5), la chambre (643) située au-dessous du piston (65) communiquant avec la chambre côté fond (632) du cylindre (63).

3. Périscope selon l'une quelconque des revendications précédentes, caractérisé par le fait qu'il comporte un réflecteur central (81) centré sur l'axe (211) du tube (21) et logé dans le sas (3) pour réfléchir le faisceau sortant du tube (21), un réflecteur latéral (86) monté à l'écart de l'axe (211) du tube (21) pour réfléchir le faisceau venant du réflecteur central suivant un axe (92) dirigé vers le bas et vers l'oculaire (88).

4. Périscope de selon la revendication 3, caractérisé par le fait que le réflecteur central (81) et le réflecteur latéral (86) sont fixes par rapport au bloc oculaire (8) le réflecteur latéral (86) étant monté à l'extérieur du sas.

5. Périscope selon la revendication 4, caractérisé par le fait qu'il comporte une enceinte (84) servant de logement au réflecteur central (81) et pourvue d'un hublot central (83) centré sur l'axe (211) du tube (21) et traversé par le faisceau sortant du tube.

6. Périscope selon l'une quelconque des revendications précédentes, caractérisé par le fait que l'axe du vérin (6) est décalé de l'axe (211) du tube (21).

7. Périscope selon la revendication 3, caractérisé par le fait que la pièce de suspension supporte le réflecteur central (81) et le réflecteur latéral (86) qui réflèchissent le faisceau vers le fond du sas selon un axe optique (92) vertical, décalé de l'axe du tube.

8. Périscope selon la revendication 7, caractérisé par le fait que le faisceau après réflexion sur le réflecteur central (81) et sur le réflecteur latéral (86) sort du sas (3) au travers d'un hublot (82) monté sur le fond dudit sas.

9. Périscope selon la revendication 8, caractérisé par le fait que le vérin (6) est coaxial au tube (21).

10. Périscope selon l'une quelconque des revendications précédentes, caractérisé par le fait qu'il comporte des moyens de guidage en translation de la pièce de suspension (5), selon l'axe (211) du tube, l'empêchant de tourner autour de cet axe.

11. Périscope selon l'une quelconque des revendications précédentes, caractérisé par le fait que le moteur d'entrainement (7) en rotation du tube (2) est monté directement sur la pièce de suspension (5) de manière que son stator soit fixé sur ladite pièce de suspension, le rotor étant fixé au tube (21).

12. Périscope selon l'une quelconque des revendications précédentes, caractérisé par le fait que la pièce de suspension (5) s'appuie sur la tige (61) du vérin (6) par l'intermédiaire d'une rotule (62).

13. Périscope selon l'une des revendications 3 à 12, caractérisé par le fait qu'il comporte un réflecteur fixe (87) qui est monté au-dessous dudit réflecteur fixe (86) de manière que l'axe (92) soit réfléchi sur ledit réflecteur (87) suivant un axe (93) qui passe au-dessous du fond du sas (3).

14. Périscope selon l'une quelconque des revendications précédentes, caractérisé par le fait qu'il comporte des amortisseurs (51) montés au-dessous de la pièce de suspension (5).

**Claims**

1. Periscope for a submarine, including a tube (21) fitted with an observation head (22) and with a lens and guided vertically by bearings (41, 42, 43) in a watertight housing (3) fixed to the pressure hull (11) and capable of being raised or lowered vertically by means of a support member (5) prevented from rotating and engaged via a bearing (52) with the lower part of the tube (21) so that the latter can pivot, and also an observation unit (8) including the eyepiece (88) and receiving the pencil of light at the exit of the said tube (21), characterised by the fact that it comprises a jack (6) engaged between the said support member (5) and an abutment situated in the interior of the pressure hull (11) at a lower level than the said support member (5), which member abuts against the stem (61) of the said jack, the observation unit (8) being fixed relative to the submarine, and the tube (21) being given rotary motion by a motor (7).

2. Periscope according to Claim 1, characterised by the fact that the jack (6) comprises a fixed cylinder (63), in which slides a piston and cylinder unit (64), in which slides a piston (65), rigid with the stem (61) on which rests the support member (5), the chamber (643) situated below the piston (65) communicating with the chamber at the lower end (632) of the cylinder (63).

3. Periscope according to any one of the preceding Claims, characterised by the fact that it includes a central reflector (81) centred on the axis (211) of the tube (21) and housed in the watertight housing (3), to reflect the light pencil exiting from the tube (21), a lateral reflector (86) mounted offset from the axis (211) of the tube (21), to reflect the pencil of light coming from the central reflector along an axis (92) directed downwards and towards the eyepiece (88).

4. Periscope according to Claim 3, characterised by the fact that the central reflector (81) and the lateral reflector (86) are fixed relative to the observation unit (8), the lateral reflector (86) being mounted outside the watertight housing.

5. Periscope according to Claim 4, characterised by the fact that it includes a chamber (84) serving as a housing for the central reflector (81) and provided with a central transparent wall (83), centred on the axis (211) of the tube (21) and traversed by the pencil of light exiting from the tube.

6. Periscope according to any one of the preceding Claims, characterised by the fact that the axis of the jack (6) is offset from the axis (211) of the tube (21).

7. Periscope according to Claim 3, characterised by the fact that the support member supports the central reflector (81) and the lateral reflector (86), which reflect the pencil of light towards the bottom of the watertight housing along vertical optical axis (92), offset from the axis of the tube.

8. Periscope according to Claim 7, characterised by the fact that, after reflection on the central reflector (81) and on the lateral reflector (86), the pencil of light leaves the watertight housing (3) through a transparent wall (82) mounted at the bottom of the said watertight housing.

9. Periscope according to Claim 8, characterised by the fact that the jack (6) is coaxial with the tube (21).

10. Periscope according to any one of the preceding Claims, characterised by the fact that it comprises means for guiding displacement of the support member (5) along the axis (211) of the tube and for preventing its rotation about the said axis.

11. Periscope according to any one of the preceding Claims, characterised by the fact that the motor (7) for imparting rotation to the tube (2) is mounted directly on the support member (5), in such a way that its stator is fixed to the said support member, the rotor being fixed to the tube (21).

12. Periscope according to any one of the preceding Claims, characterised by the fact that the support member (5) abuts against the stem (61) of the jack (6) via a swivel joint (62).

13. Periscope according to one of Claims 3 to 12, characterised by the fact that it includes a fixed reflector (87) which is mounted below the said fixed reflector (86) in such a way that the axis (92) is reflected on the said reflector (87) along an axis (93) which passes below the bottom of the watertight housing.

14. Periscope according to any one of the preceding Claims, characterised by the fact that it includes shock absorbers (51) mounted below the support member (5).

**Patentansprüche**

1. U-Bootperiskop bestehend aus einem Rohr (21) mit einem Beobachtungskopf (22) und einer Optik, das senkrecht in einer mit dem Druckkörper (11) fest verbundenen Schleusenkammer (3) über Lager (41, 42, 43) geführt ist und senkrecht über eine drehfeste Aufhängung (5) gehievt oder abgesenkt werden kann, die an dem Unterteil des Rohres (21) über ein Lager (52) derart montiert ist, dass dieses verschwenkbar ist, sowie weiterhin aus einem Beobachtungsblock (8) mit dem Okular (88), der den Strahlengang am Ausgang dieses Rohres (21) aufnimmt, dadurch gekennzeichnet, dass es einen Zylinder (6) umfasst, der zwischen dieser Aufhängung (5) und einer innen in dem Druckkörper (11) unter dieser Aufhängung (5) angeordneten Auflage montiert ist – die Aufhängung stützt sich auf der Stange (61) dieses Zylinders ab – wobei der Beobachtungsblock (8) gegenüber dem U-Boot feststeht und das Rohr 21) über einen Motor (7) drehbeweglich angetrieben wird.

2. Periskop nach Anspruch 1, dadurch gekennzeichnet, dass der Zylinder (6) ein fester Hohlkörper (63) mit einem darin gleitenden Kolbenzylinder (64) umfasst, in welchem ein mit der Stange (61) fest verbundener Kolben (65) gleitet – die Aufhängung (5) stützt sich auf dieser Stange ab – wobei die unter dem Kolben (65) angeordnete Kammer (643) mit der rückseitigen Kammer (632) des Hohlkörpers (63) in Verbindung steht.

3. Periskop nach einem der vorhergehenden Ansprüche, dadurch gekennzeichnet, dass es zur Reflexion des aus dem Rohr (21) austretenden Strahlenbündels einen zentralen auf der Achse (211) des Rohres (21) zentrierten und in der Schleusenkammer (3) untergebrachten Reflektor (81), und zur Reflexion gemäss einer nach unten und zum Okular (88) hin gerichteten Achse (92) des von dem Zentralen Reflektor ankommenden Strahlenbündels einen im Abstand von der Achse (211) des Rohres (2) montierten Seitenreflektor (86) umfasst.

4. Periskop nach Anspruch 3, dadurch gekennzeichnet, dass der zentrale Reflektor (81) und der Seitenreflektor (86) zu dem Okularsatz (8) feststehend sind, wobei der Seitenreflektor (86) ausserhalb der Schleusenkammer montiert ist.

5. Periskop nach Anspruch 4, dadurch gekennzeichnet, dass es ein als Aufnahme für den zentralen Reflektor (81) dienendes Gehäuse (84) umfasst, das eine mittige auf der Achse (211) des Rohres (21) zentrierte Luke (83) aufweist, die von dem aus dem Rohr austretenden Strahlengang durchquert wird.

6. Periskop nach einem der vorhergehenden Ansprüche, dadurch gekennzeichnet, dass die Achse des Zylinders (6) gegenüber der Achse (211) des Rohres (21) versetzt ist.

7. Periskop nach Anspruch 3, dadurch gekennzeichnet, dass die Aufhängung den zentralen Reflektor (81) und den Seitenreflektor (86) trägt, die den Strahlengang gemäss einer optischen gegenüber der Rohrachse versetzten Senkrechtachse (92) nach hinten in die Schleusenkammer reflektieren.

8. Periskop nach Anspruch 7, dadurch gekennzeichnet, dass der Strahlenbündel nach dessen Reflexion auf dem zentralen Reflektor (81) und dem Seitenreflektor (86) durch eine am Boden der Schleusenkammer angeordnete Luke (82) aus dieser Schleusenkammer (3) austritt.

9. Periskop nach Anspruch 8, dadurch gekennzeichnet, dass der Zylinder (6) zu dem Rohr (21) koaxial ist.

10. Periskop nach einem der vorhergehenden Ansprüche, dadurch gekennzeichnet, dass es Führungsmittel zur Translationsbewegung der Aufhängung (5) gemäss der Rohrachse (211) aufweist, die deren Rotation um diese Achse verhindern.

11. Periskop nach einem der vorhergehenden Ansprüche, dadurch gekennzeichnet, dass der Antriebsmotor (7) zur Umdrehung des Rohres (2) direkt auf der Aufhängung (5) derart montiert ist, dass dessen Stator an dieser Aufhängung befestigt ist, wobei der Rotor an dem Rohr (21) angebracht ist.

12. Periskop nach einem der vorhergehenden Ansprüche, dadurch gekennzeichnet, dass die Aufhängung (5) über ein Kugelgelenk (62) auf der Stange (61) des Zylinders (6) abgestützt ist.

13. Periskop nach einem der Ansprüche 3 bis 12, dadurch gekennzeichnet, dass es einen stationären unter dem ortsfesten Reflektor (86) derart angeordneten Reflektor (87) umfasst, dass die optische Achse (92) gemäss einer unter dem Boden der Schleusenkammer (3) verlaufenden Achse (93) auf dem Reflektor (87) reflektiert wird.

14. Periskop nach einem der vorhergehenden Ansprüche, dadurch gekennzeichnet, dass es unter der Aufhängung (5) angeordnete Dämpfer (51) umfasst.

**FIG.1**

**FIG.3**

FIG 2

0 045 701